# FASCICULE DE BREVET EUROPEEN

(11) **EP 3 025 060 B1**
(45) Date de publication et mention de la délivrance du brevet: **19.04.2017**
(21) Numéro de dépôt: 14759000.4
(22) Date de dépôt: 03.07.2014
(51) Int. Cl.: F04B 39/00, F04B 53/14, F04B 37/12, F16J 1/00

(54) **DISPOSITIF D'ETANCHEITE POUR PISTON**
DICHTUNGSVORRICHTUNG FÜR KOLBEN
SEALING DEVICE FOR PISTON

(30) Priorité: 23.07.2013 FR 1357275
(43) Date de publication de la demande: 01.06.2016
(73) Titulaire: Rabhi, Vianney, 69006 Lyon (FR)
(72) Inventeur: Rabhi, Vianney, 69006 Lyon (FR)
(74) Mandataire: Godard, Xavier
(86) Numéro de dépôt international: PCT/FR2014/051715
(87) Numéro de publication internationale: WO 2015/011358

(56) Documents cités:
- EP-A1- 0 541 482
- GB-A- 1 067 362
- US-A- 3 353 456

## Description

La présente invention est relative à un dispositif d'étanchéité pour piston, particulièrement adapté à tout piston opérant sous haute pression.

Les pistons sont utilisés dans de nombreuses machines notamment pour comprimer un gaz, pour pomper un liquide, pour recueillir le travail issu de la détente d'un gaz, ou pour transformer en travail mécanique un débit de liquide sous pression.

On connait d'après l'enseignement décrit dans le brevet US 3 353 456 un piston comportant un élément de support central autour duquel est agencé une pluralité d'éléments annulaires disposés les uns au-dessus des autres pour former un corps de piston cylindrique. Des segments de piston sont disposés dans des rainures délimitées par les éléments annulaires du corps de piston cylindrique. Un écrou est vissé sur l'extrémité filetée de l'élément de support central afin de maintenir les éléments annulaires et les segments ensembles.

Il est difficile de trouver un compromis acceptable entre l'étanchéité des pistons et les pertes par frottement que génèrent les moyens mis en oeuvre pour obtenir ladite étanchéité. En effet, le bilan énergétique final des dispositifs d'étanchéité des pistons résulte principalement de la somme des pertes énergétiques dues aux fuites qu'ils ne savent contenir, et du frottement qu'ils engendrent.

Parmi les applications les plus exigeantes nécessitant de disposer de pistons les plus étanches possibles en générant les pertes par frottement les plus faibles possibles figurent les pompes à huile à haute pression voire à très haute pression, à pistons axiaux ou radiaux, et notamment celles destinées aux systèmes de transmission hydraulique.

Pour réaliser une étanchéité, une méthode consiste à prévoir un jeu faible entre le piston et son cylindre. Ledit jeu est obtenu par la précision d'usinage. Cette approche est efficace à des pressions de quelques dizaines à quelques centaines de bar, cependant, sous très hautes pressions, par exemple de mille cinq cent ou deux-mille bar, ladite approche conduit à des débits de fuite d'huile élevés car lorsqu'il est soumis aux dites très hautes pressions, le cylindre dans lequel est logé le piston voit son diamètre augmenté au point que le jeu nominal entre ledit cylindre et ledit piston augmente significativement.

Une alternative consiste à prévoir un joint logé dans une gorge aménagée en périphérie du piston. Toutefois, sous les très hautes pressions précédemment évoquées, ledit joint se déforme dans sa gorge, vient exercer une forte pression sur le cylindre, et engendre des pertes par frottement élevées ce qui nuit au rendement final de la pompe à huile qui en est équipée. De plus, le diamètre du cylindre augmentant avec la pression, ledit joint doit assurer l'étanchéité recherchée dans un jeu plus important entre ledit piston et ledit cylindre, ce qui tend à extruder ledit joint sous l'effet de la pression et à conduire à la destruction dudit joint.

Une autre approche consiste à prévoir pour la pompe à huile un piston dont tout ou partie du corps possède une rigidité telle que la pression soumet ledit corps à une déformation comparable à celle à laquelle elle soumet le cylindre dans lequel évolue ledit piston. Cette approche permet de conserver un jeu faible entre ledit piston et ledit cylindre et a par exemple été retenue par la société « INNAS » pour réaliser sa pompe hydraulique « floating cup », Toutefois, ladite approche présente l'inconvénient de ne fonctionner qu'avec un cylindre qui a une rigidité sensiblement comparable à celle du corps du piston ce qui - dans le domaine des hautes pressions - conduit à des contraintes excessives dans le matériau dudit cylindre et dudit piston.

On remarque que les segments à coupe sont inadaptés aux pistons opérants sous très haute pression car les débits de fuite d'huile au niveau de ladite coupe sont excessifs. En outre, ladite coupe est d'autant plus grande que le diamètre du cylindre augmente sous l'effet de ladite pression. Ceci réduit le rendement volumétrique de la pompe à huile qui en est équipée. De plus, la pression qu'exerce ledit segment sur la paroi dudit cylindre est d'autant plus importante que ladite pression est élevée. Ce dernier effet augmente les pertes par frottement au niveau du contact entre ledit segment et ledit cylindre, ce qui réduit le rendement mécanique de ladite pompe à huile.

C'est notamment pour résoudre ces différents problèmes liés aux pistons en général et aux pistons des pompes à huile à haute pression en particulier, que le dispositif d'étanchéité pour piston selon l'invention permet, selon le mode de réalisation retenu :
- De réaliser de façon robuste et durable une étanchéité poussée entre tout piston et le cylindre avec lequel ils coopère, y compris lorsque ledit piston doit contenir un fluide mis sous une pression très élevée jusqu'à deux mille bar et plus, et malgré la déformation importante à laquelle ladite pression soumet ledit cylindre ;
- D'engendrer des pertes par frottement faibles ou modérées, quelle que soit la pression qu'exerce le fluide sur ledit piston et sur le cylindre avec lequel coopère ledit piston.

En outre, le dispositif d'étanchéité pour piston selon l'invention est prévu pour présenter un prix de revient en fabrication modéré, ne faisant appel à aucun procédé de réalisation complexe ou matériau coûteux.

Il est entendu qu'outre son application aux pistons radiaux ou axiaux des pompes à huiles connues de l'homme de l'art, le dispositif d'étanchéité pour piston selon l'invention peut s'appliquer à toute machine ou appareil comprenant au moins un piston, que ladite machine ou ledit appareil soit - à titre non limitatif - une pompe, un moteur ou un vérin, ou qu'elle ou il soit, par exemple, un émetteur, un répartiteur ou un amplificateur de pression. Le dispositif d'étanchéité selon invention peut en outre s'appliquer à tout piston quel qu'en soit le type réalisant une étanchéité avec un cylindre ou avec toute autre forme évidée de forme complémentaire audit piston et qui contient un gaz, un liquide ou un élément semi-solide.

Les autres caractéristiques de la présente invention ont été décrites dans la description et dans les revendications secondaires dépendantes directement ou indirectement de la revendication principale.

Le dispositif d'étanchéité pour piston suivant la présente invention est prévu pour un piston évoluant dans un cylindre dont l'une des extrémités au moins est fermée par une chambre à fluide, ledit piston comprenant au moins une tête de piston qui comporte au moins une jupe fixe et qui présente d'une part, une face d'appui de piston pour exercer un effort sur tout moyen de transmission mécanique, hydraulique ou pneumatique et d'autre part, une face de compression débouchant dans la chambre à fluide et pouvant recevoir la pression d'un fluide, et comprend :
- Au moins une jupe glissante de forme cylindrique logée dans le cylindre avec un faible jeu, placée dans le prolongement de la tête de piston du coté de la face de compression et dans l'axe de ladite tête, ladite jupe glissante étant reliée à ladite tête par une liaison mécanique inter-jupes qui lui permet de se déplacer en translation longitudinale par rapport à ladite tête ;
- Au moins un canal de transmission de pression aménagé à l'intérieur de la jupe glissante et traversant cette dernière de part en part dans le sens axial ;
- Au moins un segment continu extensible de forme annulaire continue, intercalé entre la jupe fixe et la jupe glissante, et comprenant une face cylindrique interne de segment soumise à la pression du fluide via le canal de transmission de pression, une face cylindrique externe de segment pouvant entrer en contact avec le cylindre, une face axiale de segment coté jupe fixe maintenue directement ou indirectement en contact étanche avec la jupe fixe et une face axiale de segment coté jupe glissante maintenue directement ou indirectement en contact étanche avec la jupe glissante ;
- Au moins un ressort de jupe glissante qui tend à rapprocher la jupe glissante de la jupe fixe, et à comprimer axialement le segment continu extensible.

Le dispositif d'étanchéité pour piston suivant la présente invention comprend une liaison mécanique inter-jupes qui est constituée d'un mandrin solidaire de la face de compression et qui coopère avec un orifice de mandrin aménagé axialement dans la jupe glissante, ledit mandrin étant logé dans ledit orifice.

Le dispositif d'étanchéité pour piston suivant la présente invention comprend un ressort de jupe glissante qui est une rondelle élastique prenant appui d'une part sur l'extrémité du mandrin, et d'autre part sur la jupe glissante.

Le dispositif d'étanchéité pour piston suivant la présente invention comprend au moins un cordon flottant d'un diamètre extérieur sensiblement inférieur au diamètre intérieur du cylindre qui est directement ou indirectement intercalé entre le segment continu extensible et la jupe fixe ou entre ledit segment et la jupe glissante, la face axiale de segment coté jupe fixe et/ou la face axiale de segment coté jupe glissante étant maintenue(s) en contact étanche avec ledit cordon tandis que ce dernier est traversé par au moins un orifice axial de cordon permettant à la liaison mécanique inter-jupes de traverser ledit cordon.

Le dispositif d'étanchéité pour piston suivant la présente invention comprend un cordon flottant qui comporte des moyens de centrage de cordon qui tendent à centrer radialement ledit cordon par rapport à la jupe glissante ou par rapport la jupe fixe, lesdits moyens prenant directement ou indirectement appui sur l'une ou l'autre desdites jupes ou sur la liaison mécanique inter-jupes.

Le dispositif d'étanchéité pour piston suivant la présente invention comprend un cordon flottant qui comporte une gorge de segment qui coopère au centrage radial du segment continu extensible rapport à la jupe glissante ou par rapport la jupe fixe.

Le dispositif d'étanchéité pour piston suivant la présente invention comprend une jupe fixe qui comporte au moins un segment racleur logé dans une gorge de racleur aménagée sur la surface cylindrique externe de ladite jupe.

Le dispositif d'étanchéité pour piston suivant la présente invention comprend une face cylindrique externe de segment qui comporte au moins une gorge axiale de micro fuite.

Le dispositif d'étanchéité pour piston suivant la présente invention comprend une face cylindrique interne de segment qui coopère avec au moins un joint d'étanchéité circulaire en matériau souple pour directement ou indirectement réaliser une étanchéité avec la jupe fixe et/ou la jupe glissante.

Le dispositif d'étanchéité pour piston suivant la présente invention comprend une portion de longueur axiale de la face cylindrique interne de segment qui est la plus proche de la jupe fixe qui est en moyenne d'un plus grand diamètre que la portion de longueur axiale de ladite face cylindrique interne qui est la plus proche de la jupe glissante de sorte que le segment continu extensible est sur l'ensemble de sa longueur axiale radialement moins épais et moins raide du coté de la jupe fixe que du coté de la jupe glissante, tandis que la face cylindrique externe de segment reste pour sa part approximativement de même diamètre sur toute la longueur axiale dudit segment.

Le dispositif d'étanchéité pour piston suivant la présente invention comprend au moins un segment de déblocage continu extensible de forme annulaire continue et dont le diamètre extérieur est sensiblement inférieur au diamètre inférieur du cylindre, qui est directement ou indirectement intercalé entre deux segments continus extensibles, ledit segment de déblocage continu extensible comprenant une face cylindrique interne de segment de déblocage soumise à la pression du fluide via le canal de transmission de pression, une face cylindrique externe de segment de déblocage pouvant se rapprocher du cylindre et deux faces axiales de segment de déblocage chacune maintenue directement ou indirectement en contact étanche avec l'un des deux segments continus extensibles.

Le dispositif d'étanchéité pour piston suivant la présente invention comprend une jupe glissante qui présente des moyens de centrage de segment continu extensible qui coopèrent avec la face cylindrique interne de segment pour centrer le segment continu extensible par rapport à ladite jupe et/ou des moyens de centrage de segment de déblocage qui coopèrent avec la face cylindrique interne de segment de déblocage pour centrer le segment de déblocage continu extensible par rapport à ladite jupe.

Le dispositif d'étanchéité pour piston suivant la présente invention comprend un segment continu extensible et/ou un segment de déblocage continu extensible qui est(sont) maintenu(s) approximativement centré(s) par rapport à la jupe glissante par une bague de centrage elle même centrée par rapport à ladite jupe par des moyens de centrage de bague de centrage.

La description qui va suivre en regard des dessins annexés et donnés à titre d'exemples non limitatifs permettra de mieux comprendre l'invention, les caractéristiques qu'elle présente, et les avantages qu'elle est susceptible de procurer :
Figure 1 est une vue tridimensionnelle du dispositif d'étanchéité pour piston suivant l'invention.
Figure 2 est une vue tridimensionnelle éclatée du dispositif d'étanchéité pour piston suivant l'invention.
Figure 3 est une vue en coupe schématique du dispositif d'étanchéité pour piston suivant l'invention comportant trois segments continus extensibles séparés les uns des autres par un cordon flottant, chaque dit segment étant maintenu approximativement centré par rapport à la jupe glissante par une bague de centrage.
Figure 4 est une vue en coupe schématique du dispositif d'étanchéité pour piston suivant l'invention comportant trois segments continus extensibles et deux segments de déblocage continu extensibles, lesdits segments étant séparés les uns des autres par un cordon flottant et étant maintenus approximativement centrés par rapport à la jupe glissante par une bague de centrage.
Figure 5 est une vue en coupe schématique du dispositif d'étanchéité pour piston suivant l'invention comportant trois segments continus extensibles séparés les uns des autres par un cordon flottant dont la gorge de segment assure le centrage desdits segments par rapport à la jupe glissante.
Figure 6 est une vue en coupe schématique du dispositif d'étanchéité pour piston suivant l'invention comportant trois segments continus extensibles entre lesquels est intercalé un segment de déblocage continu extensible tandis que la jupe glissante présente des moyens centrage de segment continu extensible et des moyens de centrage de segment de déblocage.
Figure 7 est une vue en coupe schématique partielle du dispositif d'étanchéité pour piston suivant l'invention qui représente trois segments continus extensibles entre lesquels est intercalé un segment de déblocage continu extensible, lesdits segments étant rendus étanches entre eux d'une part, et avec la jupe fixe et la jupe glissante d'autre part, par un joint d'étanchéité circulaire.
Figure 8 est une vue tridimensionnelle éclatée d'un segment continu extensible et d'un segment de déblocage continu extensible tels peut les comporter le dispositif d'étanchéité pour piston suivant l'invention, ainsi que des cordons flottants et bagues de centrage avec lesquels coopèrent lesdits segments.
Figures 9 à 16 sont des vues en coupe schématique partielle illustrant le fonctionnement du dispositif d'étanchéité pour piston suivant l'invention lorsqu'il comprend trois segments continus extensibles entre lesquels est intercalé un segment de déblocage continu extensible.
Figure 17 est une vue tridimensionnelle en écorché d'un segment continu extensible tel qu'il peut être prévu pour le dispositif d'étanchéité pour piston suivant l'invention, ladite vue incluant une coupe schématique montrant plus en détail la section dudit segment.

### DESCRIPTION DE L'INVENTION:

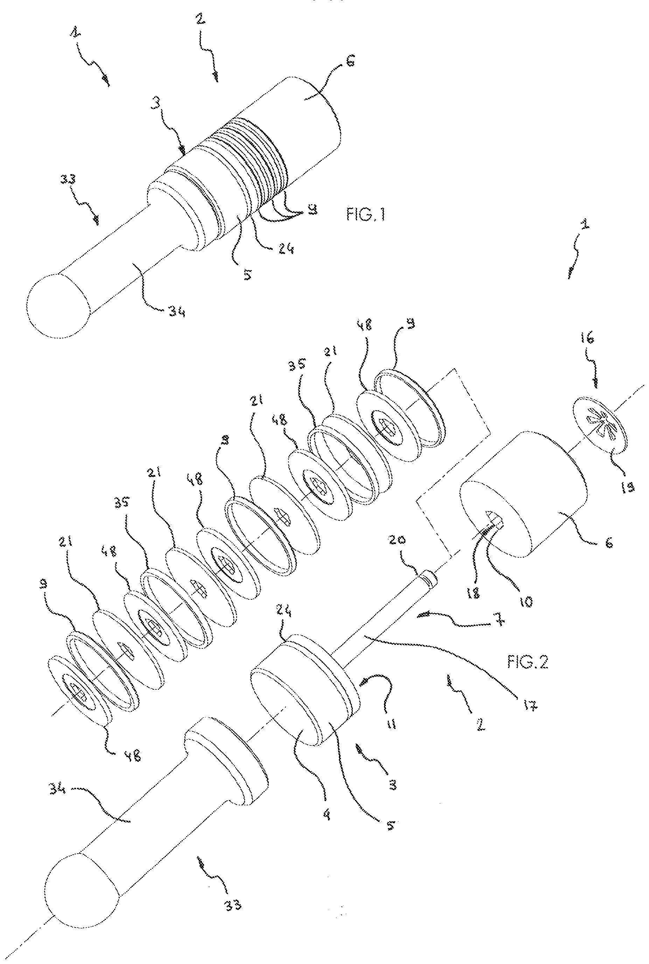

On a montré en figures 1 à 17 le dispositif d'étanchéité pour piston 1, divers détails de ses composants, ses variantes, et ses accessoires.

Le dispositif d'étanchéité pour piston 1 est prévu pour un piston 2 évoluant dans un cylindre 8 dont l'une des extrémités au moins est fermée par une chambre à fluide 27, ledit piston 2 comprenant au moins une tête de piston 3 qui comporte au moins une jupe fixe 5 et qui présente d'une part, une face d'appui de piston 4 pour exercer un effort sur tout moyen de transmission 33 mécanique, hydraulique ou pneumatique et d'autre part, une face de compression 11 débouchant dans la chambre à fluide 27 et pouvant recevoir la pression d'un fluide 36.

On note que le moyen de transmission 33 peut par exemple être une jambe de force 34 telle que représentée en figures 1 à 6.

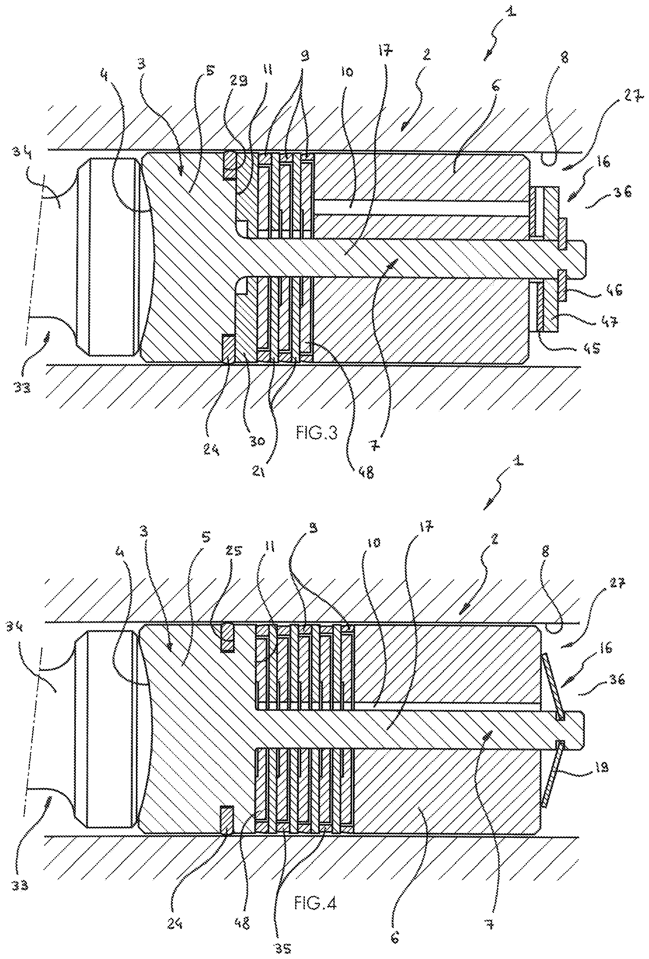

On voit, particulièrement sur les figures 3 à 6, que le dispositif d'étanchéité pour piston 1 comprend au moins une jupe glissante 6 de forme cylindrique logée dans le cylindre 8 avec un faible jeu, placée dans le prolongement de la tête de piston 3 du coté de la face de compression 11 et dans l'axe de ladite tête 3, ladite jupe glissante 6 étant reliée à ladite tête 3 par une liaison mécanique inter-jupes 7 qui lui permet de se déplacer en translation longitudinale par rapport à ladite tête 3, ladite liaison mécanique 7 définissant avec ladite jupe 6 une liaison glissière, une liaison pivot glissant, une liaison rotule glissante ou tout autre type de liaison, tandis que le faible jeu laissé entre ladite jupe 6 et le cylindre 8 constitue une étanchéité.

Le dispositif d'étanchéité pour piston 1 comprend aussi au moins un canal de transmission de pression 10 aménagé à l'intérieur de la jupe glissante 6 et traversant cette dernière de part en part dans le sens axial ;

Ledit dispositif 1 comprend en outre au moins un segment continu extensible 9 de forme annulaire continue, intercalé entre la jupe fixe 5 et la jupe glissante 6, et comprenant une face cylindrique interne de segment 12 soumise à la pression du fluide 36 via le canal de transmission de pression 10, une face cylindrique externe de segment 13 pouvant entrer en contact avec le cylindre 8, une face axiale de segment coté jupe fixe 14 maintenue directement ou indirectement en contact étanche avec la jupe fixe 5 et une face axiale de segment coté jupe glissante 15 maintenue directement ou indirectement en contact étanche avec la jupe glissante 6, ledit segment 9 ne comportant aucune coupe tandis que lorsque la pression dans la chambre à fluide 27 est nulle, ledit segment 9 laisse un jeu diamétral avec le cylindre 8 et présente une épaisseur radiale tels qu'à partir d'une certaine pression exercée par le fluide 36 sur la face cylindrique interne de segment 12 via le canal de transmission de pression 10, la face cylindrique externe de segment 13 entre en contact avec le cylindre 8 sur toute sa circonférence.

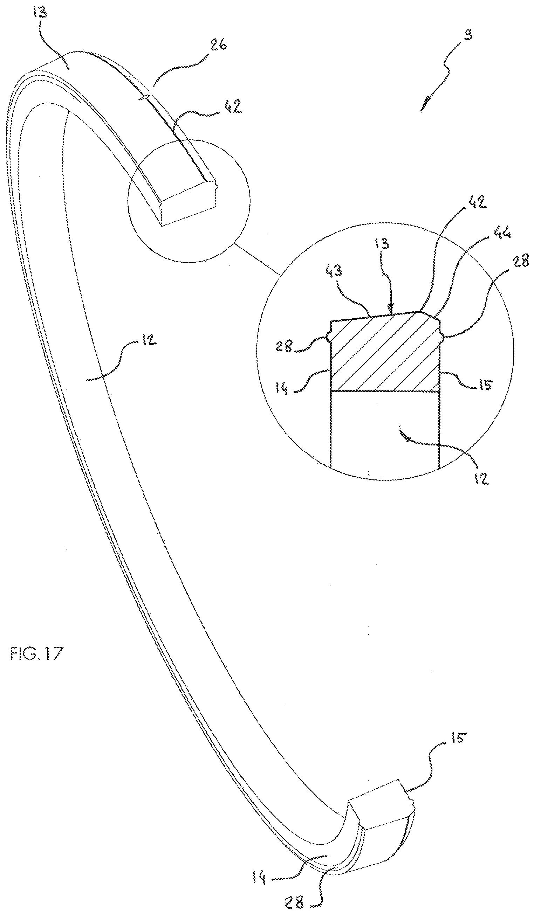

On note que, selon une variante de réalisation du dispositif 1 suivant l'invention clairement illustrée en figure 17, une ligne de contact 42 peut être aménagée en protubérance sur la face cylindrique externe de segment 13. Ladite ligne 42 peut être fortement excentrée sur la longueur axiale du segment continu extensible 9 en direction de la jupe glissante 6 de sorte que du coté de ladite ligne 42 orienté en direction de la jupe fixe 5 soit constituée une pente longue de faible inclinaison 43, tandis que du coté de ladite ligne 42 orienté en direction de la jupe glissante 6 est constituée une pente courte de forte inclinaison 44.

Il est précisé que le segment continu extensible 9, la jupe glissante 6 ou la jupe fixe 5 peuvent être nitrurés, cémentés et/ou revêtus de DLC « Diamond-like-Carbon » ou de tout autre revêtement dur et/ou à bas coefficient de frottement. On note que la face cylindrique externe de segment 13 peut présenter un profil en bombé, en simple pente, en double pente, en épaulement, de forme complexe ou de toute géométrie applicable aux segments en général et permettant de contrôler la pression de contact entre ladite face 13 et le cylindre 8, l'épaisseur du film d'huile formé entre ladite face 13 et ledit cylindre 8, ou les mouvements de torsion, de basculement ou de flexion du segment continu extensible 9.

En outre, le profil de la face cylindrique externe de segment 13 peut être prévu en biseau pour permettre au segment continu extensible 9 de se rétracter rapidement sous l'effet d'un équilibrage des pressions auxquelles est soumise ladite face 13 de part et d'autre de sa ligne de contact avec le cylindre 8. On remarque aussi que la face axiale de segment coté jupe fixe 14 et/ou la face axiale de segment coté jupe glissante 15 et/ou la jupe fixe 5 et/ou la jupe glissante 6 peut comporter une protubérance annulaire axiale 28 permettant de réduire la surface de contact entre lesdites faces 14, 15 et lesdites jupes 5, 6 afin de garantir la meilleure étanchéité possible entre lesdites faces 14, 15 et lesdites jupes 5, 6.

Il en est de même si lesdites faces 14, 15 sont en contact avec un segment de déblocage continu extensible 35 ou un cordon flottant 21, ce dernier pouvant également comporter - selon un mode particulier de réalisation du dispositif d'étanchéité suivant l'invention - une protubérance annulaire axiale 28.

Comme l'illustrent les figures 2 à 6, le dispositif d'étanchéité pour piston 1 comprend au moins un ressort de jupe glissante 16 qui tend à rapprocher la jupe glissante 6 de la jupe fixe 5, et à comprimer axialement le segment continu extensible 9, ledit ressort 16 pouvant être une rondelle Belleville, une rondelle élastique quel qu'en soit le type, ou pouvant être hélicoïdal, à lame, de torsion, de traction, de compression, ou de tout type connu de l'homme de l'art.

Selon une variante de réalisation du dispositif d'étanchéité pour piston 1 suivant l'invention illustrée en figures 2 à 6, la liaison mécanique inter-jupes 7 peut être constituée d'un mandrin 17 solidaire de la face de compression 11 et coopérant avec un orifice de mandrin 18 aménagé axialement dans la jupe glissante 6, ledit mandrin 17 étant logé dans ledit orifice 18 et pouvant présenter une section circulaire ou de tout autre géométrie tandis que possiblement, un jeu suffisant est laissé entre ledit mandrin 17 et l'orifice de mandrin 18 qui laisse un espace constituant le canal de transmission de pression 10, ce dernier pouvant également prendre la forme d'au moins une gorge longitudinale aménagée dans l'orifice de mandrin 18 et/ou sur le mandrin 17.

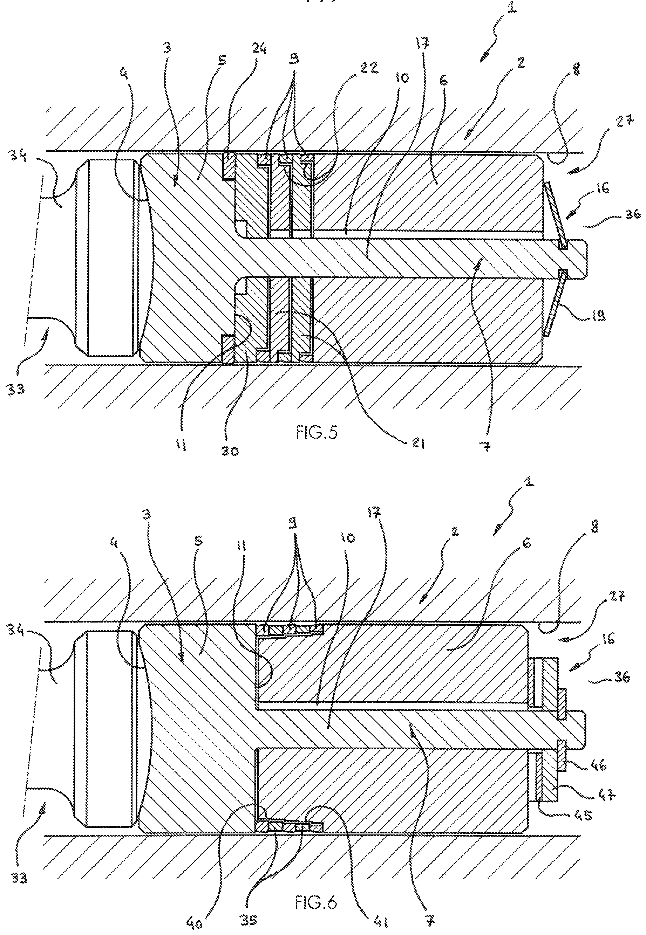

On note que le ressort de jupe glissante 16 peut être une rondelle élastique 19 prenant appui d'une part sur l'extrémité du mandrin 17, et d'autre part sur la jupe glissante 6, ladite rondelle 19 pouvant par exemple comporter un diaphragme tel que montré en figures 2, 4 et 5 dont la partie centrale est partiellement logée dans une gorge d'arrêt 20 aménagée à l'extrémité du mandrin 17, ladite rondelle 19 pouvant aussi être - selon une autre variante de réalisation montrée en figures 3 et 6 - une rondelle-ressort ondulée 45 coopérant avec un circlips 46 logé dans ladite gorge 20, une rondelle plate 47 pouvant en ce cas être intercalée entre ledit circlips 46 et ladite rondelle 45.

Les figures 2 à 5 et 7 à 16 montrent que le dispositif d'étanchéité pour piston 1 peut également comporter au moins un cordon flottant 21 d'un diamètre extérieur sensiblement inférieur au diamètre intérieur du cylindre 8 est directement ou indirectement intercalé entre le segment continu extensible 9 et la jupe fixe 5 ou entre ledit segment 9 et la jupe glissante 6, la face axiale de segment coté jupe fixe 14 et/ou la face axiale de segment coté jupe glissante 15 étant maintenue(s) en contact étanche avec ledit cordon 21 tandis que ce dernier est traversé par au moins un orifice axial de cordon 31 permettant à la liaison mécanique inter-jupes 7 de traverser ledit cordon 21.

On note que le cordon flottant 21 peut être intercalé entre deux segments continus extensible 9, ou entre un segment continu extensible 9 et un segment de déblocage continu extensible 35. Par ailleurs, le cordon flottant 21 peut être nitruré, cémenté et/ou revêtu de DLC « Diamond-like-Carbon » ou de tout autre revêtement dur et/ou à bas coefficient de frottement.

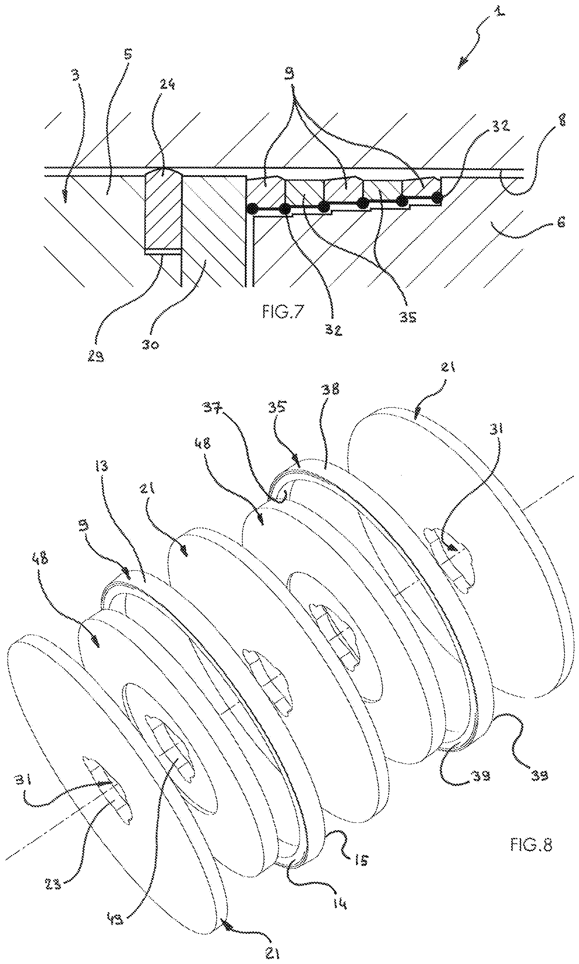

A titre de variante, le cordon flottant 21 peut comporter des moyens de centrage de cordon 23 particulièrement visibles en figure 8 et qui tendent à centrer radialement ledit cordon 21 par rapport à la jupe glissante 6 ou par rapport la jupe fixe 5, lesdits moyens 23 prenant directement ou indirectement appui sur l'une ou l'autre desdites jupes 5, 6 ou sur la liaison mécanique inter-jupes 7 ou encore, sur un autre cordon flottant 21.

Comme montré en figure 5, le cordon flottant 21 peut en outre comporter une gorge de segment 22 qui coopère au centrage radial du segment continu extensible 9 rapport à la jupe glissante 6 ou par rapport la jupe fixe 5.

On note que le cordon flottant 21 peut aussi comporter un canal axial qui laisse passer le fluide 36 d'une face à l'autre dudit cordon 21 et/ou un autre canal, gorge ou lamage radial(e) qui laisse passer le fluide 36 du centre vers la périphérie dudit cordon 21.

Comme on le voit en figures 1 à 5 et en figure 7, la jupe fixe 5 du dispositif d'étanchéité pour piston 1 peut comporter au moins un segment racleur 24 logé dans une gorge de racleur 25 aménagée sur la surface cylindrique externe de ladite jupe 5, ledit segment 24 restant en permanence en contact avec la paroi interne du cylindre 8 de sorte à toujours maintenir de l'huile stockée entre la jupe fixe 5 et la jupe glissante 6 tandis qu'il peut être en matériau souple tel que du caoutchouc ou de l'élastomere chargé ou non de matériau antifriction et/ou anti-usure, être un joint simple ou composite, ou être un anneau métallique comportant une coupe.

On note que dans ce dernier cas, le segment racleur 24 peut être nitruré, cémenté et/ou revêtu de DLC « Diamond-like-Carbon » ou de tout autre revêtement dur et/ou à bas coefficient de frottement. On note également que ledit segment 24 peut comporter un profil bombé, conique ou de toute géométrie applicable aux segments et permettant de contrôler la pression de contact qu'exerce ledit segment 24 sur ledit cylindre 8, ou l'épaisseur du film d'huile formé entre ledit segment 24 et ledit cylindre 8, ou encore, les mouvements de torsion, de basculement ou de flexion dudit segment 24.

On remarque en figures 3, 5 et 7 que la gorge de racleur 25 peut avantageusement être constituée d'un lamage 29 réalisé en bordure axiale de la jupe fixe 5, ledit lamage 29 coopérant avec une rondelle de lamage 30, cette configuration permettant de monter le segment racleur 24 sur un piston 2 de très petit diamètre.

Selon une variante que représente la figure 17, la face cylindrique externe de segment 13 peut comporter au moins une gorge axiale de micro fuite 26 qui permet à une très faible quantité d'huile sous pression de passer entre le segment continu extensible 9 et le cylindre 8 lorsque la face cylindrique externe de segment 13 est au contact dudit cylindre 8.

On remarque en figure 7 que la face cylindrique interne de segment 12 peut coopérer avec au moins un joint d'étanchéité circulaire 32 en matériau souple pour directement ou indirectement réaliser une étanchéité avec la jupe fixe 5 et/ou la jupe glissante 6, ledit joint 32 pouvant être de section ronde, carrée, polygonale, complexe, ou de toute géométrie réalisable par l'homme de l'art, tandis que ladite étanchéité peut être réalisée par ledit joint 32 directement entre la face cylindrique interne de segment 12 et la jupe fixe 5 et/ou la jupe glissante 6, ou indirectement en réalisant simultanément une étanchéité avec au moins un cordon flottant 21 et/ou un segment de déblocage continu extensible 35 intercalé(s) entre ladite face 21 et lesdites jupes 5, 6.

Selon une variante de réalisation du dispositif d'étanchéité pour piston 1 suivant l'invention, la portion de longueur axiale de la face cylindrique interne de segment 12 qui est la plus proche de la jupe fixe 5 peut être en moyenne d'un plus grand diamètre que la portion de longueur axiale de ladite face cylindrique interne 12 qui est la plus proche de la jupe glissante 6 de sorte que le segment continu extensible 9 est sur l'ensemble de sa longueur axiale radialement moins épais et moins raide du coté de la jupe fixe 5 que du coté de la jupe glissante 6, tandis que la face cylindrique externe de segment 13 reste pour sa part approximativement de même diamètre sur toute la longueur axiale dudit segment 9.

On comprend que cette géométrie particulière permet notamment au segment continu extensible 9 de refouler - comme une pompe un peu d'huile ou de tout autre fluide 36 sous pression en direction de la jupe glissante 6 lors de la montée en pression de la chambre à fluide 27.

On note que cette disposition s'applique si ledit segment 9 est chargé de réaliser l'étanchéité entre le piston 2 et le cylindre 8 à pression intermédiaire et est pour cela positionné entre, d'une part, un segment continu extensible 9 placé au plus proche de la jupe glissante 6 pour réaliser ladite étanchéité à la pression la plus basse, et d'autre part, un autre segment continu extensible 9 placé au plus proche de la jupe fixe 5 pour réaliser ladite étanchéité à la pression la plus haute. Ainsi réalisé, ledit segment 9 opérant à pression intermédiaire permet - par l'effet de pompe qu'il produit après être entré en contact avec le cylindre 8 tandis que la pression dans la chambre à fluide 27 continue à monter - que le segment continu extensible 9 immédiatement voisin, opérant à une pression plus basse et placé plus près de la jupe glissante 6, se rétracte lors de ladite montée en pression de la chambre à fluide 27. Cet effet de rétractation est nécessaire pour limiter les frottements générés par le dispositif d'étanchéité pour piston 1 suivant l'invention.

Comme illustré en figures 2 et 4 et en figures 6 à 16, le dispositif d'étanchéité pour piston 1 suivant l'invention peut comporter au moins un segment de déblocage continu extensible 35 de forme annulaire continue dont le diamètre extérieur est sensiblement inférieur au diamètre intérieur du cylindre 8 et qui est directement ou indirectement intercalé entre deux segments continus extensibles 9, ledit segment de déblocage continu extensible 35 comprenant une face cylindrique interne de segment de déblocage 37 soumise à la pression du fluide 36 via le canal de transmission de pression 10, une face cylindrique externe de segment de déblocage 38 pouvant se rapprocher du cylindre 8 et deux faces axiales de segment de déblocage 39 chacune maintenue directement ou indirectement en contact étanche avec l'un des deux segments continus extensibles 9.

On note que ledit segment de déblocage 37 ne comporte aucune coupe et laisse un jeu diamétral avec le cylindre 8 et présente une épaisseur radiale tels, qu'à partir du moment où le segment continu extensible 9 qui est en contact étanche avec ledit segment de déblocage 37 et qui est le plus proche de la jupe fixe 5 entre en contact avec le cylindre 8, il reste encore une certaine distance entre la face cylindrique externe de segment de déblocage 38 dudit segment de déblocage 37 et ledit cylindre 8. Une fois ce dernier contact établi et la pression continuant à augmenter dans la chambre à fluide 27, le diamètre de la face cylindrique externe de segment de déblocage 38 continue à augmenter ce qui augmente la pression du fluide 36 compris entre ladite face 38, les deux dits segments continus extensibles 9 et le cylindre 8 ce qui tend à équilibrer les pressions auxquelles est soumise la face cylindrique externe de segment 13 de part et d'autre de sa ligne de contact avec le cylindre 8 du segment continu extensible 9 qui est en contact étanche avec ledit segment de déblocage 37 et qui est le plus proche de la jupe glissante 6.

Il résulte de ceci que ce dernier segment continu extensible 9 peut se rétracter rapidement de sorte qu'il cède la charge d'assurer l'étanchéité entre le piston 2 et le cylindre 8 au segment continu extensible 9 qui est en contact étanche avec ledit segment de déblocage 37 et qui est le plus proche de la jupe fixe 5. On note que le segment de déblocage continu extensible 35 peut être nitruré, cémenté et/ou revêtu de DLC « Diamond-like-Carbon » ou de tout autre revêtement dur et/ou à bas coefficient de frottement.

En outre, les faces axiales de segment de déblocage 39 peuvent comporter une protubérance annulaire axiale 28 qui réduit la surface de contact et augmente la pression de contact entre lesdites faces 39 et les segments continus extensibles 9 ou entre lesdites faces 39 et les cordons flottants 21. Ladite protubérance 28 renforce l'étanchéité du dispositif d'étanchéité pour piston 1 selon l'invention.

On voit, particulièrement en figure 6, que la jupe glissante 6 peut - à titre de variante - présenter des moyens de centrage de segment continu extensible 40 qui coopèrent avec la face cylindrique interne de segment 12 pour centrer le segment continu extensible 9 par rapport à ladite jupe 6 et/ou des moyens de centrage de segment de déblocage 41 qui coopèrent avec la face cylindrique interne de segment de déblocage 37 pour centrer le segment de déblocage continu extensible 35 par rapport à ladite jupe 6.

Selon une autre variante du dispositif d'étanchéité pour piston 1 représentée en figures 2 à 4 et en figure 8, le segment continu extensible 9 et/ou le segment de déblocage continu extensible 35 peut être maintenu approximativement centré par rapport à la jupe glissante 6 par une bague de centrage elle même centrée par rapport à ladite jupe 6 par des moyens de centrage de bague de centrage 49 pouvant coopérer - par exemple - avec le mandrin 17.

On note que la bague de centrage 49 est traversée par au moins un orifice axial permettant à la liaison mécanique inter-jupes de traverser ladite bague 49, tandis que cette dernière peut également comporter un canal axial qui laisse passer le fluide 36 d'une face à l'autre de ladite bague 49 et/ou un autre canal, gorge ou lamage radial(e) qui laisse passer le fluide 36 du centre vers la périphérie de ladite bague 49.

### FONCTIONNEMENT DE L'INVENTION :

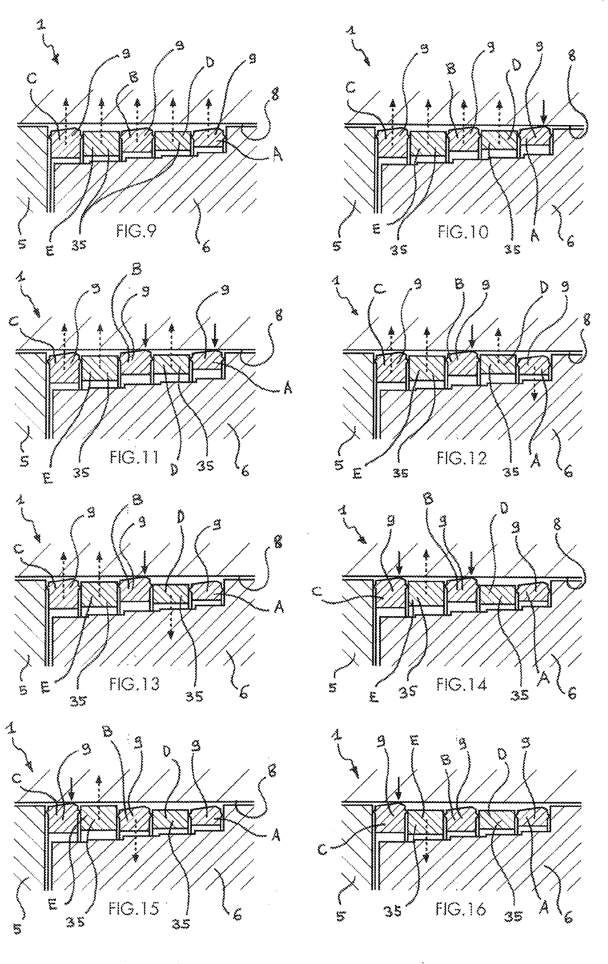

Le fonctionnement du dispositif d'étanchéité pour piston 1 se comprend à la vue des figures 9 à 16 sur lesquelles, à titre de variante de réalisation non-limitative, ledit dispositif 1 est représenté muni de trois segments continus extensibles 9 intercalés entre la jupe fixe 5 et la jupe glissante 6, tandis qu'un segment de déblocage continu extensible 35 est intercalé entre chaque dit segment 9.

Selon cet exemple de réalisation dudit dispositif 1 suivant l'invention, la chambre à fluide 27 est emplie de fluide 36 dont la pression est variable, ledit fluide 36 étant de l'huile. On remarque que sous l'effet de la pression de ladite huile, le piston 2 peut pousser sur des moyens de transmission 33 mécaniques, ces derniers prenant la forme - selon l'exemple non-limitatif exposé en figures 1 à 6 - d'une jambe de force 34.

Pour faciliter la compréhension du fonctionnement du dispositif d'étanchéité 1, nous nommerons ici le premier segment continu extensible 9 en partant de la jupe glissante 6 « segment basse-pression A », le deuxième « segment moyenne-pression B », et le troisième « segment-haute pression C ». Ce dernier segment C est donc celui positionné au plus proche de la jupe fixe 5.

Dans même, nous nommerons ici le segment de déblocage continu extensible 35 positionné entre le segment basse-pression A et le segment moyenne-pression B « segment de déblocage basse-pression D », tandis que nous nommerons le segment de déblocage continu extensible 35 positionné entre le segment moyenne pression B et le segment haute-pression C « segment de déblocage moyenne-pression E ».

Le dispositif d'étanchéité 1 tel que représenté en figures 9 à 16 assure ainsi l'étanchéité du piston 2 dans le cylindre 8 suivant quatre modes de fonctionnement, chaque dit mode correspondant à une plage de pression que peut exercer sur la face de compression 11 l'huile contenue dans la chambre à fluide 27.

Pour simplifier la description du fonctionnement du dispositif 1 suivant l'invention, nous considérerons ici que - conformément à ce qu'illustrent les figures 9 à 16 - seuls les segments continus extensibles 9 comportent des protubérances annulaires axiales 28, et que ces dernières présentent toutes le même diamètre de contact. Nous considérerons également que la face cylindrique externe de segment 13 du segment basse pression A, celle du segment moyenne pression B et celle du segment haute pression C, sont de même diamètre lorsqu'aucune pression d'huile particulière ne règne dans la chambre à fluide 27.

Ceci exposé, le fonctionnement du dispositif d'étanchéité pour piston 1 selon l'invention est le suivant :
Si une pression faible règne dans la chambre à fluide 27 comme le montre la figure 9, il n'est fait appel à aucun segment continu extensible 9 pour assurer l'étanchéité entre le piston 2 et le cylindre 8 et pour empêcher l'huile contenue dans ladite chambre 27 de fuir entre ledit piston 2 et ledit cylindre, 8. A ce faible niveau de pression, ladite étanchéité est réalisée par le seul jeu faible existant entre la jupe glissante 6 et ledit cylindre 8.

Aussi faible soit-elle, la pression régnant dans la chambre à fluide 27 n'en est pas moins immédiatement transmise à la face cylindrique interne de segment 12 que comporte chacun des trois segments continus extensibles 9, et à la face cylindrique interne de segment de déblocage 37 que comporte chacun des deux segments de déblocage continus extensibles 35. Ladite pression est transmise auxdites faces 12, 37 via le canal de transmission de pression 10 aménagé à l'intérieur de la jupe glissante 6, ledit canal 10 traversant ladite jupe 6 de part en part dans le sens axial.

Comme illustré en figure 9, il résulte de ceci que le diamètre de la face cylindrique externe de segment 13 des trois segments continus extensibles 9 augmente sensiblement, mais pas assez pour que ladite face 13 entre en contact avec le cylindre 8. De façon similaire, le diamètre de la face cylindrique externe de segment de déblocage 28 des deux segments de déblocage continus extensibles 35 augmente sensiblement, tout en restant à une certaine distance de la paroi du cylindre 8.

On remarque sur les figures 9 à 16. mais aussi par exemple sur la figure 6 que l'huile contenue dans la chambre à fluide 27 ne peut pas fuir - ou très peu - via le canal de transmission de pression 10 puis entre le segment basse pression A et la jupe glissante 6, entre tout segment continu extensible 9 et le segment de déblocage continu extensibles 35 avec lequel il coopère, et entre le segment haute pression C et la jupe fixe 5. En effet, ces composants sont comprimés entre eux dans le sens axial par, d'une part, le ressort de jupe glissante 16 et par, d'autre part, l'effort que produit la pression de l'huile sur la jupe glissante 6 et qui tend à rapprocher cette dernière de la jupe fixe 5. On note que ledit effort est approximativement égal au produit de ladite pression par la section du diamètre de la jupe glissante 6 minoré du produit de ladite pression par la section du diamètre de contact de la protubérance annulaire axiale 28 du segment basse pression A. Comme exposé précédemment, ladite protubérance assure l'étanchéité entre ladite jupe glissante 6 et ledit segment A.

On remarque en figures 9 à 16 que l'épaisseur radiale moyenne du segment basse pression A est plus faible que celle du segment moyenne pression B, cette dernière étant plus faible que celle du segment haute pression C. En conséquence, sous l'effet d'une même pression d'huile, le diamètre de la face cylindrique externe de segment 13 du segment basse pression A augmente plus que celui de ladite face 13 du segment moyenne pression B, ce dernier augmentant davantage que celui de ladite face 13 du segment haute pression C.

Selon le même principe, l'épaisseur radiale moyenne du segment de déblocage basse-pression D est plus faible que celle du segment de déblocage moyenne-pression E. Il résulte de ceci que sous l'effet d'une même pression d'huile, le diamètre de la face cylindrique externe de segment de déblocage 28 du segment de déblocage basse-pression D augmente plus que celui de la face cylindrique externe de segment de déblocage 28 du segment de déblocage moyenne-pression E.

La pression de l'huile contenue dans la chambre à fluide 27 continuant à augmenter, le diamètre de la face cylindrique externe de segment 13 des trois segments continus extensibles 9 continue à augmenter jusqu'à ce que la face cylindrique externe de segment 13 du segment basse-pression A entre en contact circonférentiel avec le cylindre 8 comme le montre la figure 10.

On note que la pression de contact qu'exerce ladite face 13 sur le cylindre 8 est notamment déterminée par le profil de ladite face 13 du segment basse pression A tel que particulièrement visible en figure 17, ce profil étant également applicable à la face cylindrique externe de segment 13 des segments moyenne-pression B et haute-pression C. Ainsi, c'est la pression qu'exerce l'huile sur la face cylindrique interne de segment 12 dudit segment A conjuguée avec la raideur et le profil de ce dernier qui constitue l'étanchéité recherchée entre ledit segment A et le cylindre 8.

La pression continuant à augmenter dans la chambre à fluide 27, le diamètre de la face cylindrique externe de segment 13 du segment basse-pression A exerce une pression croissante sur le cylindre 8 tandis le diamètre de la face cylindrique externe de segment 13 du segment moyenne-pression B et du segment haute-pression C continue d'augmenter et ceci, jusqu'à ce que la face cylindrique externe de segment 13 du segment moyenne-pression B entre en contact circonférentiel avec le cylindre 8 comme le montre la figure 11. A ce stade, la pression d'huile reste insuffisante pour que la face cylindrique externe de segment 13 du segment haute-pression C entre en contact circonférentiel avec le cylindre 8 car l'épaisseur radiale dudit segment haute-pression C est plus grande que celle du segment moyenne-pression B, de même que sa raideur.

En entrant en contact circonférentiel avec le cylindre 8, le segment moyenne pression B réalise - en fonctionnant comme le segment basse pression Au - une étanchéité entre ledit segment moyenne pression B et ledit cylindre 8.

A ce stade, le segment basse-pression A et le segment moyenne-pression B sont tous deux en contact avec le cylindre 8, tandis que seul le segment basse-pression A arrête effectivement l'huile sous pression qui pourrait sinon passer entre le piston 2 et le cylindre 8.

La pression continuant à augmenter dans la chambre à fluide 27, l'étanchéité effective assurée par le segment basse-pression A va pouvoir être transférée au segment moyenne-pression B grâce à l'action du segment de déblocage basse-pression D.

En effet, de l'huile à très basse pression est emprisonnée dans le faible espace laissé entre le segment basse-pression A, le segment moyenne-pression B, la face cylindrique externe de segment de déblocage 38 du segment de déblocage basse-pression D, et la paroi du cylindre 8. Cet espace est tellement faible qu'une très petite réduction absolue de son volume se traduit par une grande élévation relative de la pression de l'huile qu'il contient.

La pression continuant à croître dans la chambre à fluide 27, le diamètre de la face cylindrique externe de segment de déblocage 38 du segment de déblocage basse-pression D augmente, ladite face 38 comprimant l'huile contenue dans ledit espace. Ladite huile exerce alors une pression grandissante sur la face cylindrique externe de segment 13 du segment basse-pression A, ladite pression se rapprochant de la pression qu'exerce l'huile contenue dans la chambre à fluide 27 via le canal de transmission de pression 10 sur la face cylindrique interne de segment 12 dudit segment basse-pression A.

Au-delà d'une certaine pression dans ledit espace, le segment basse pression A ne peut plus rester au contact du cylindre 8 et se rétracte comme le montre la figure 12. Ce faisant, il n'assure plus d'étanchéité avec le cylindre 8 et la pression de la chambre à fluide 27 se propage immédiatement à l'espace initialement laissé entre le segment basse pression A, le segment moyenne pression B, la face cylindrique externe de segment de déblocage 38 du segment de déblocage basse-pression D, et la paroi du cylindre 8. Ceci a pour effet de finir de rétracter le segment de déblocage basse-pression D, et de rétracter également le segment de déblocage basse-pression D comme le montre la figure 13.

A ce stade, le segment moyenne-pression B reste donc seul à assurer l'essentiel de l'étanchéité entre le piston 2 et le cylindre 8.

La pression dans la chambre à fluide 27 continuant à croître, comme le montrent les figures 14 à 16, la même séquence de relai dans la constitution d'une étanchéité s'opère entre le segment moyenne pression B et le segment haute-pression C, le segment de déblocage basse-pression D précédemment utilisé étant remplacé dans ladite séquence par le segment de déblocage moyenne-pression E.

On remarque en figures 1 à 5 et en figure 7 qu'un segment racleur 24 peut être avantageusement prévu dans une gorge de racleur 25 aménagée sur la surface cylindrique externe de la jupe fixe 5 ou dans un lamage 29 réalisé en bordure axiale de ladite jupe 5. Ce segment racleur 24 évite que les aller-retour rapides que peut effectuer le piston 2 dans le cylindre 8 ne vide - par accélération - l'huile contenue entre les segments continus extensibles 9 et le cylindre 8 d'une part, et entre les segments de déblocage continus extensibles 35 et ledit cylindre 8 d'autre part. Et effet, la présence de ladite huile est nécessaire pour que tout segment continu extensible 9 devant se rétracter pour céder l'étanchéité dont il avait jusqu'alors la charge au segment continu extensible 9 voisin placé plus près de la jupe fixe 5, puissent effectivement le faire. Cette rétractation ne peut s'opérer que si - consécutivement à la montée en pression de la chambre à fluide 27 - le segment de déblocage continu extensible 35 positionné en direction de la jupe fixe 5 immédiatement après ledit segment 9 devant se rétracter, peut effectivement comprimer l'huile emprisonnée entre sa face cylindrique externe de segment de déblocage 38 et le cylindre 8. Cette condition est nécessaire pour que la pression qu'exerce l'huile sur la face cylindrique externe de segment 13 du segment continu extensible 9 devant se rétracter se rapproche de la pression qu'exerce ladite huile sur la face cylindrique interne de segment 12 dudit segment 9, ce qui provoque la rétractation effective dudit segment 9 telle que recherchée.

On note qu'avantageusement, la jupe glissante 6 laisse toujours fuir une très petite quantité d'huile entre elle-même et le cylindre 8 à chaque fois que la pression dans la chambre à fluide 27 devient inférieure à la pression où le segment basse-pression A entre en contact circonférentiel avec le cylindre 8. Ainsi, la jupe glissante 6 et le segment racleur 24 coopèrent à toujours maintenir de l'huile entre les segments continus extensibles 9 et le cylindre 8 d'une part, et entre les segments de déblocage continus extensibles 35 et ledit cylindre 8 d'autre part.

On remarque qu'un faible jeu laissé entre la jupe fixe 5 et le cylindre 8 peut éventuellement rendre inutile le recours au segment racleur 24.

On note que le dispositif d'étanchéité pour piston 1 selon l'invention fonctionne que la pression régnant dans la chambre à fluide 27 soit ascendante ou descendante, chaque segment continu extensible 9 entrant en contact circonférentiel avec le cylindre 8 dans une plage de pression déterminée.

On remarque qu'en phase de pression ascendante dans la chambre à fluide 27, sur certaines plages de pression, un seul segment continu extensible 9 est en contact avec le cylindre 8 tandis que sur d'autres plages de pression où un segment continu extensible 9 cède l'étanchéité dont il avait jusqu'alors la charge au segment continu extensible 9 voisin placé plus près de la jupe fixe 5, ces deux derniers segments continus extensibles 9 sont temporairement en contact avec le cylindre 8 simultanément. Ce fonctionnement particulier prévu par le dispositif d'étanchéité pour piston 1 selon l'invention permet de limiter au maximum toute fuite d'huile entre le piston 2 et le cylindre 8.

La figure 17 illustre le profil des faces cylindriques externes de segment 13 des segments continus extensibles 9 tel qu'il peut être prévu selon une variante de réalisation du dispositif d'étanchéité pour piston 1. Ledit profil définit une ligne de contact 42 qui est aménagée en protubérance sur la face cylindrique externe de segment 13, et fortement excentrée sur la longueur axiale du segment continu extensible 9 en direction de la jupe glissante 6. Il résulte dudit profil que du coté de ladite ligne 42 orienté en direction de la jupe fixe 5 se trouve une pente longue de faible inclinaison 43, tandis que du coté de ladite ligne 42 orienté en direction de la jupe glissante 6 se trouve une pente courte de forte inclinaison 44.

Ce exemple non-limitatif de profil de la face cylindrique externe de segment 13 assure une pression de contact suffisamment élevée au niveau de la ligne de contact 42, afin de réaliser une bonne étanchéité malgré que l'effort exercé sur ladite ligne 42 reste faible. En effet, ledit effort résulte de la pression exercée par l'huile sur la face cylindrique interne de segment 12 sur la longueur de la pente longue de faible inclinaison 43, minoré de l'effort de rétractation du segment continu extensible 9 dû à sa raideur propre.

L'effort faible exercé sur la ligne de contact 42 génère des pertes par frottement faibles à l'interface entre ladite ligne 42 et le cylindre 8. Toutefois, la faible largeur de contact de ladite ligne 42 résulte en une pression de contact élevée de ladite ligne 42 sur le cylindre 8, ladite pression procurant une bonne étanchéité.

On peut préciser ici que la hauteur de la pente longue de faible inclinaison 43 et de la pente courte de forte inclinaison 44 n'est en pratique que de quelques micromètres. Notamment, la hauteur de la pente longue de faible inclinaison 43 est calculée pour qu'il subsiste un espace suffisant entre ladite pente 43 et le cylindre 8 lorsque le segment de déblocage continu extensible 35 qui jouxte ladite pente 43 comprime l'huile entre cette dernière et le cylindre 8, et ceci, afin que le segment continu extensible 9 sur lequel est aménagée ladite pente 43 se rétracte bien comme il se doit.

A la lecture de la description du fonctionnement du dispositif d'étanchéité pour piston 1 qui vient d'être faite, on déduit aisément qu'aucune limite n'est fixée au nombre de segments continus extensibles 9 et de segments de déblocage continus extensibles 35 que peut comporter le piston 2. On comprend en outre que les pertes par frottement survenant entre le piston 2 et le cylindre 8 sont d'autant plus faibles que ledit piston 2 comporte un nombre élevé de segments continus extensibles 9.

On peut rappeler qu'à très basses pression, ledit dispositif 1 ne génère pas de frottement significatif entre les segments continus extensibles 9 et le cylindre 8, l'étanchéité étant réalisée de manière satisfaisante par le jeu faible laissé entre la jupe glissante 6 et le cylindre 8.

Lorsque la pression de l'huile à étancher monte dans la chambre à fluide 27, on remarque que le frottement entre tout segment continu extensible 9 et le cylindre 8 reste limité car l'effort qu'exerce la face cylindrique externe de segment 13 dudit segment 9 sur ledit cylindre 8 sous l'effet de ladite pression est minoré par l'effort antagoniste de rétractation que produit ledit segment 9 du fait de sa raideur, ce dernier effort s'opposant à l'augmentation du diamètre dudit segment 9. Pour autant, la pression de contact circonférentiel qu'exerce ladite face 13 sur ledit cylindre 8 peut rester suffisamment élevée pour garantir une bonne étanchéité, ladite pression étant notamment déterminée par le profil de ladite face 13 tel que représenté - à titre d'exemple - en figure 17.

Ainsi, le dispositif d'étanchéité pour piston 1 selon l'invention permet de conserver à la fois des frottements modérés et une bonne étanchéité même si l'huile contenue dans la chambre à fluide 27 est soumise à de très hautes pressions, de l'ordre de deux-mille bar et plus. En effet, les fortes variations de diamètre du cylindre 8 qui résultent de telles pressions n'empêchent ni le fonctionnement du dispositif 1 selon l'invention, ni sa faculté à assurer une bonne étanchéité tout en générant de faibles niveaux de frottement. Ceci provient du fait que l'épaisseur radiale de chaque segment continu extensible 9 est avantageusement calculée tenant compte de la rigidité du cylindre 8 pour que chaque dit segment 9 entre en contact circonférentiel avec ledit cylindre 8 à partir de la pression recherchée, puis génère la pression de contact nécessaire entre sa face cylindrique externe de segment 13 et ledit cylindre 8 afin de réaliser l'étanchéité recherchée.

On note que de manière générale, le dispositif d'étanchéité pour piston 1 selon l'invention requiert une grande précision d'usinage au moins pour la réalisation de la jupe glissante 6, des segments continus extensibles 9, des segments de déblocage continus extensibles 35 et du cylindre 8, ladite précision étant nécessaire pour assurer une étanchéité correcte à basse pression et pour minimiser le jeu au repos entre lesdits segments 9, 35 et ledit cylindre 8.

En outre, si ledit dispositif 1 est utilisé dans le domaine des très hautes pressions, la rigidité du cylindre 8 doit être suffisamment grande pour que les segments continus extensibles 9 ne soient pas sollicités en fatigue sous des contraintes mécaniques trop élevées.

On remarque ainsi que l'épaisseur radiale respective des segments continus extensibles 9 et des segments de déblocage continus extensibles 35 d'une part, et le jeu laissé entre lesdits segments 9, 35 et le cylindre 8 d'autre part, comptent parmi les principaux facteurs qui déterminent le fonctionnement du dispositif d'étanchéité pour piston 1 selon l'invention. Il en est de même pour la raideur radiale du cylindre 9 relativement à celle desdits segments 9, 35. En outre, le positionnement axial de la ligne de contact 42 sur la face cylindrique externe de segment 13, de même que la largeur de contact de ladite ligne 42 sur le cylindre 8 en fonction de la pression appliquée à la face cylindrique interne de segment 12 du segment comprenant ladite ligne 42, déterminent fortement le fonctionnement du dispositif 1 suivent l'invention. En tout état de cause, la conception et le dimensionnement dudit dispositif 1 peut avantageusement recourir à la méthode des éléments finis.

Aussi, le principe de fonctionnement du dispositif d'étanchéité pour piston 1 selon l'invention suggère des segments continus extensibles 9 et des segments de déblocage continus extensibles 35 réalisés dans des matériaux à haute limite élastique, à haute résistance mécanique, et à haute résistance a la fatigue.

Les possibilités du dispositif d'étanchéité pour piston 1 suivant l'invention ne s'en limitent pas aux applications qui viennent d'être décrites et il doit d'ailleurs être entendu que la description qui précéde n'a été donnée qu'à titre d'exemple et qu'elle ne limite nullement le domaine de ladite invention telle que définie par les revendications annexées.

## Revendications

1. Dispositif d'étanchéité pour piston (1) prévu pour un piston (2) évoluant dans un cylindre (8) dont l'une des extrémités au moins est fermée par une chambre à fluide (27), ledit piston (2) comprenant au moins une tête de piston (3) qui comporte au moins une jupe fixe (5) et qui présente d'une part, une face d'appui de piston (4) pour exercer un effort sur tout moyen de transmission (33) mécanique, hydraulique ou pneumatique et d'autre part, une face de compression (11) débouchant dans la chambre à fluide (27) et pouvant recevoir la pression d'un fluide (36), **caractérisé en ce qu'il** comprend :
• Au moins une jupe glissante (6) de forme cylindrique logée dans le cylindre (8) avec un faible jeu, placée dans le prolongement de la tête de piston (3) du coté de la face de compression (11) et dans l'axe de ladite tête (3), ladite jupe glissante (6) étant reliée à ladite tête (3) par une liaison mécanique inter-jupes (7) qui lui permet de se déplacer en translation longitudinale par rapport à ladite tête (3) ;
• Au moins un canal de transmission de pression (10) aménagé à l'intérieur de la jupe glissante (6) et traversant cette dernière de part en part dans le sens axiale ;
• Au moins un segment continu extensible (9) de forme annulaire continue, intercalé entre la jupe fixe (5) et la jupe glissante (6), et comprenant une face cylindrique interne de segment (12) soumise à la pression du fluide (36) via le canal de transmission de pression (10), une face cylindrique externe de segment (13) pouvant entrer en contact avec le cylindre (8), une face axiale de segment coté jupe fixe (14) maintenue directement ou indirectement en contact étanche avec la jupe fixe (5) et une face axiale de segment coté jupe glissante (15) maintenue directement ou indirectement en contact étanche avec la jupe glissante (6) ;
• Au moins un ressort de jupe glissante (16) qui tend à rapprocher la jupe glissante (6) de la jupe fixe (5), et à comprimer axialement le segment continu extensible (9).

2. Dispositif d'étanchéité pour piston suivant la revendication 1, **caractérisé en ce que** la liaison mécanique inter-jupes (7) est constituée d'un mandrin (17) solidaire de la face de compression (11) et coopérant avec un orifice de mandrin (18) aménagé axialement dans la jupe glissante (6), ledit mandrin (17) étant logé dans ledit orifice (18).

3. Dispositif d'étanchéité pour piston suivant la revendication 1, **caractérisé en ce que** le ressort de jupe glissante (16) est une rondelle élastique (19) prenant appui d'une part sur l'extrémité du mandrin (17), et d'autre part sur la jupe glissante (6).

4. Dispositif d'étanchéité pour piston suivant la revendication 1, **caractérisé en ce qu**'au moins un cordon flottant (21) d'un diamètre extérieur sensiblement inférieur au diamètre intérieur du cylindre (8) est directement ou indirectement intercalé entre le segment continu extensible (9) et la jupe fixe (5) ou entre ledit segment (9) et la jupe glissante (6), la face axiale de segment coté jupe fixe (14) et/ou la face axiale de segment coté jupe glissante (15) étant maintenue(s) en contact étanche avec ledit cordon (21) tandis que ce dernier est traversé par au moins un orifice axial de cordon (31) permettant à la liaison mécanique inter-jupes (7) de traverser ledit cordon (21).

5. Dispositif d'étanchéité pour piston suivant la revendication 4, **caractérisé en ce que** le cordon flottant (21) comporte des moyens de centrage de cordon (23) qui tendent à centrer radialement ledit cordon (21) par rapport à la jupe glissante (6) ou par rapport la jupe fixe (5), lesdits moyens (23) prenant directement ou indirectement appui sur l'une ou l'autre desdites jupes (5, 6) ou sur la liaison mécanique inter-jupes (7).

6. Dispositif d'étanchéité pour piston suivant la revendication 4, **caractérisé en ce que** le cordon flottant (21) comporte une gorge de segment (22) qui coopère au centrage radial du segment continu extensible (9) rapport à la jupe glissante (6) ou par rapport la jupe fixe (5).

7. Dispositif d'étanchéité pour piston suivant la revendication 1, **caractérisé en ce que** la jupe fixe (5) comporte au moins un segment racleur (24) logé dans une gorge de racleur (25) aménagée sur la surface cylindrique externe de ladite jupe (5).

8. Dispositif d'étanchéité pour piston suivant la revendication 1, **caractérisé en ce que** la face cylindrique externe de segment (13) comporte au moins une gorge axiale de micro fuite (26).

9. Dispositif d'étanchéité pour piston suivant la revendication 1, **caractérisé en ce que** la face cylindrique interne de segment (12) coopère avec au moins un joint d'étanchéité circulaire (32) en matériau souple pour directement ou indirectement réaliser une étanchéité avec la jupe fixe (5) et/ou la jupe glissante (6).

10. Dispositif d'étanchéité pour piston suivant la revendication 1. **caractérisé en ce que** la portion de longueur axiale de la face cylindrique interne de segment (12) qui est la plus proche de la jupe fixe (5) est en moyenne d'un plus grand diamètre que la portion de longueur axiale de ladite face cylindrique interne (12) qui est la plus proche de la jupe glissante (6) de sorte que le segment continu extensible (9) est sur l'ensemble de sa longueur axiale radialement moins épais et moins raide du coté de la jupe fixe (5) que du coté de la jupe glissante (6), tandis que la face cylindrique externe de segment (13) reste pour sa part approximativement de même diamètre sur toute la longueur axiale dudit segment (9).

11. Dispositif d'étanchéité pour piston suivant la revendication 1, **caractérisé en ce qu**'au moins un segment de déblocage continu extensible (35) de forme annulaire continue et dont le diamètre extérieur est sensiblement inférieur au diamètre intérieur du cylindre (8), est directement ou indirectement intercalé entre deux segments continus extensibles (9), ledit segment de déblocage continu extensible (35) comprenant une face cylindrique interne de segment de déblocage (37) soumise à la pression du fluide (36) via le canal de transmission de pression (10), une face cylindrique externe de segment de déblocage (38) pouvant se rapprocher du cylindre (8) et deux faces axiales de segment de déblocage (39) chacune maintenue directement ou indirectement en contact étanche avec l'un des deux segments continus extensibles (9).

12. Dispositif d'étanchéité pour piston suivant l'une quelconque des revendications 1 ou 11, **caractérisé en ce que** la jupe glissante (6) présente des moyens de centrage de segment continu extensible (40) qui coopèrent avec la face cylindrique interne de segment (12) pour centrer le segment continu extensible (9) par rapport à ladite jupe (6) et/ou des moyens de centrage de segment de déblocage (41) qui coopèrent avec la face cylindrique interne de segment de déblocage (37) pour centrer le segment de déblocage continu extensible (35) par rapport à ladite jupe (6).

13. Dispositif d'étanchéité pour piston suivant l'une quelconque des revendications 1 ou 11, **caractérisé en ce que** le segment continu extensible (9) et/ou le segment de déblocage continu extensible (35) est(sont) maintenu(s) approximativement centré(s) par rapport à la jupe glissante (6) par une bague de centrage (48) elle même centrée par rapport à ladite jupe (6) par des moyens de centrage de bague de centrage (49).

## Patentansprüche

1. Dichtungsvorrichtung für Kolben (1), welche für einen Kolben (2) vorgesehen ist, der in einem Zylinder (8) hin- und hergeht, dessen eines der Enden mindestens durch eine Flüssigkeitskammer (27) geschlossen ist, wobei der Kolben (2) zumindest einen Kolbenkopf (3) aufweist, welcher mindestens eine feste Schürze (5) umfasst und welcher einerseits eine Kolben-Auflagefläche (4), um eine Kraft auf jedwedes mechanisches, hydraulisches oder pneumatisches Übertragungsmittel (33) auszuüben, und andererseits eine Kompressionsfläche (11) aufweist, welche in die Flüssigkeitskammer (27) mündet und den Druck einer Flüssigkeit (36) aufnehmen kann, **dadurch gekennzeichnet, dass** sie Folgendes aufweist:
• Mindestens eine gleitende Schürze (6) in zylindrischer Form, welche in dem Zylinder (8) mit einem geringen Spiel aufgenommen ist und in der Verlängerung des Kolbenkopfes (3) auf der Seite der Kompressionsfläche (11) und in der Achse des Kopfes (3) angeordnet ist, wobei die gleitende Schürze (6) über eine mechanische Verbindung (7) zwischen den Schürzen mit dem Kopf (3) verbunden ist, welche es ihr ermöglicht, sich in longitudinaler Translation in Bezug auf den Kopf (3) zu verlagern;
• Mindestens einen Kanal zur Übertragung von Druck (10), welcher im Inneren der gleitenden Schürze (6) eingebracht ist und diese letztere in axialer Richtung auf voller Länge durchquert;
• Mindestens ein kontinuierliches, erweiterbares, kontinuierlich ringförmiges Segment (9), welches zwischen der festen Schürze (5) und der gleitenden Schürze (6) eingefügt ist und eine innere, zylindrische Segmentfläche (12) aufweist, welche über den Kanal zur Übertragung von Druck (10) mit dem Druck des Fluids (36) beaufschlagt wird, wobei eine äußere, zylindrische Segmentfläche (13) mit dem Zylinder (8) in Kontakt gelangen kann, wobei eine axiale Segmentfläche (14) auf der Seite der festen Schürze direkt oder indirekt in abdichtendem Kontakt mit der festen Schürze (5) gehalten wird und eine axiale Segmentfläche (15) auf der Seite der gleitenden Schürze direkt oder indirekt in abdichtendem Kontakt mit der gleitenden Schürze (6) gehalten wird;
• Mindestens eine Feder (16) der gleitenden Schürze, welche dazu neigt, die gleitende Schürze (6) und die feste Schürze (5) einander zu nähern und das kontinuierliche, erweiterbare Segment (9) axial zusammen zu drücken.

2. Dichtungsvorrichtung für Kolben nach Anspruch 1, **dadurch gekennzeichnet, dass** die mechanische Verbindung (7) zwischen den Schürzen aus einem Dorn (17) gebildet ist, welcher fest mit der Kompressionsfläche (11) verbunden ist und mit einer Dornöffnung (18) zusammenwirkt, welche axial in die gleitende Schürze (6) eingebracht ist, wobei der Dorn (17) in der Öffnung (18) aufgenommen ist.

3. Dichtungsvorrichtung für Kolben nach Anspruch 1, **dadurch gekennzeichnet, dass** die Feder (16) der gleitenden Schürze eine elastische Scheibe (19) ist, welche sich einerseits an dem Ende des Dorns (17) und andererseits an der gleitenden Schürze (6) abstützt.

4. Dichtungsvorrichtung für Kolben nach Anspruch 1, **dadurch gekennzeichnet, dass** mindestens eine schwimmende Scheibe (21) mit einem Außendurchmesser, der im Wesentlichen kleiner als der Innendurchmesser des Zylinders (8) ist, direkt oder indirekt zwischen das kontinuierliche, erweiterbare Segment (9) und die feste Schürze (5) oder zwischen das Segment (9) und die gleitende Schürze (6) eingefügt ist, wobei die axiale Segmentfläche (14) auf der Seite der festen Schürze und / oder die axiale Segmentfläche (15) auf der Seite der gleitenden Schürze in abdichtendem Kontakt mit der Scheibe (21) gehalten wird (werden), während diese Letztere von mindestens einer axialen Scheibenöffnung (31) durchdrungen ist, welche es der mechanische Verbindung (7) zwischen den Schürzen ermöglicht, die Scheibe (21) zu durchdringen.

5. Dichtungsvorrichtung für Kolben nach Anspruch 4, **dadurch gekennzeichnet, dass** die schwimmende Scheibe (21) Mittel (23) zur Zentrierung der Scheibe aufweist, welche dazu neigen, die Scheibe (21) in Bezug auf die gleitende Schürze (6) oder in Bezug auf die feste Schürze (5) zu zentrieren, wobei sich die Mittel (23) direkt oder indirekt auf der einen oder der anderen der Schürzen (5, 6) oder auf der mechanischen Verbindung (7) zwischen den Schürzen abstützen.

6. Dichtungsvorrichtung für Kolben nach Anspruch 4, **dadurch gekennzeichnet, dass** die schwimmende Scheibe (21) eine Segmentnut (22) aufweist, welche bei der radialen Zentrierung des kontinuierlichen, erweiterbaren Segments (9) in Bezug auf die gleitende Schürze (6) oder in Bezug auf die feste Schürze (5) mitwirkt.

7. Dichtungsvorrichtung für Kolben nach Anspruch 1, **dadurch gekennzeichnet, dass** die feste Schürze (5) mindestens einen Segment-Abstreifer (24) aufweist, welcher in einer Abstreifernut (25) aufgenommen ist, welche auf der äußeren, zylindrischen Fläche der Schürze (5) eingebracht ist.

8. Dichtungsvorrichtung für Kolben nach Anspruch 1, **dadurch gekennzeichnet, dass** die äußere, zylindrische Segmentfläche (13) mindestens eine axiale Mikro-Leckage-Nut (26) aufweist.

9. Dichtungsvorrichtung für Kolben nach Anspruch 1, **dadurch gekennzeichnet, dass** die innere, zylindrische Segmentfläche (12) mit mindestens einer kreisförmigen Dichtung (32) aus elastischem Material zusammenwirkt, um direkt oder indirekt eine Abdichtung mit der festen Schürze (5) und / oder der gleitenden Schürze (6) zu verwirklichen.

10. Dichtungsvorrichtung für Kolben nach Anspruch 1, **dadurch gekennzeichnet, dass** der axiale Längenabschnitt der inneren, zylindrischen Segmentfläche (12), welcher der festen Schürze (5) am nächsten liegt, im Mittel einen größeren Durchmesser aufweist als der axiale Längenabschnitt der inneren, zylindrischen Segmentfläche (12), welcher der gleitenden Schürze (6) am nächsten liegt, so dass das kontinuierliche, erweiterbare Segment (9) über seine gesamte axiale Länge radial weniger dick und weniger steil auf der Seite der festen Schürze (5) ist als auf der Seite der gleitenden Schürze (6), während die äußere, zylindrische Segmentfläche (13) ihrerseits annähernd auf dem gleichen Durchmesser über die gesamte axiale Länge des Segments (9) verbleibt.

11. Dichtungsvorrichtung für Kolben nach Anspruch 1, **dadurch gekennzeichnet, dass** mindestens ein kontinuierliches, ausdehnbares, kontinuierlich ringförmiges Freigabesegment (35), dessen Außendurchmesser im Wesentlichen kleiner als der Innendurchmesser des Zylinders (8) ist, direkt oder indirekt zwischen zwei kontinuierliche, erweiterbare Segmente (9) eingefügt ist, wobei das kontinuierliche, ausdehnbare Freigabesegment (35) eine innere, zylindrische Freigabesegmentfläche (37) aufweist, welche über den Kanal zur Übertragung von Druck (10) mit dem Druck des Fluids (36) beaufschlagt ist, wobei eine äußere, zylindrische Freigabesegmentfläche (38) sich dem Zylinder (8) und zwei axialen Freigabesegmentfläche (39) nähert, welche jeweils direkt oder indirekt in abdichtendem Kontakt mit dem einen der beiden kontinuierlichen, ausdehnbaren Segmenten (9) gehalten werden.

12. Dichtungsvorrichtung für Kolben nach einem der Ansprüche 1 oder 11, **dadurch gekennzeichnet, dass** die gleitende Schürze (6) Mittel (40) zur Zentrierung des kontinuierlichen, ausdehnbaren Segments aufweist, welche mit der inneren, zylindrischen Segmentfläche (12) zusammenwirken, um das kontinuierliche, ausdehnbare Segment (9) in Bezug auf die Schürze (6) zu zentrieren, und / oder Mittel (41) zur Zentrierung des Freigabesegments aufweist, welche mit der inneren, zylindrischen Freigabesegmentfläche (37) zusammenwirken, um das kontinuierliche, ausdehnbare Freigabesegment (35) in Bezug auf die Schürze (6) zu zentrieren.

13. Dichtungsvorrichtung für Kolben nach einem der Ansprüche 1 oder 11, **dadurch gekennzeichnet, dass** das kontinuierliche, ausdehnbare Segment (9) und / oder das kontinuierliche, ausdehnbare Freigabesegment (35) in Bezug auf die gleitende Schürze (6) durch einen Zentrierring (48), welcher selbst in Bezug auf die Schürze (6) durch Mittel (49) zur Zentrierung des Zentrierrings zentriert ist, annähernd zentriert gehalten wird (werden).

## Claims

1. Sealing device for a piston (1) provided for a piston (2) moving in a cylinder (8) of which one of the ends at least is closed by a fluid chamber (27), said piston (2) comprising at least one piston head (3) which includes at least one fixed skirt (5) and has, on the one hand, a piston support face (4) in order to exert a force on any mechanical, hydraulic or pneumatic transmission means (33) and, on the other hand, a compression face (11) which emerges in the fluid chamber (27) and which can receive the pressure of a fluid (36), **characterized in that** it comprises:
• at least one sliding skirt (6) of cylindrical shape housed in the cylinder (8) with a small clearance, placed in the extension of the piston head (3) on the side of the compression face (11) and in the axis of said head (3), said sliding skirt (6) being connected to said head (3) by a mechanical inter-skirt connection (7) which enables it to move in longitudinal translation with respect to said head (3);
• at least one pressure transmission channel (10) arranged inside the sliding skirt (6) and passing right through the latter in the axial direction;
• at least one extensible continuous segment (9) of continuous annular form, interposed between the fixed skirt (5) and the sliding skirt (6), and comprising an internal cylindrical segment face (12) subjected to the pressure of the fluid (36) via the pressure transmission channel (10), an external cylindrical segment face (13) capable of coming into contact with the cylinder (8), an axial segment face on the side of the fixed skirt (14) held directly or indirectly in sealed contact with the fixed skirt (5) and an axial segment face on the side of the sliding skirt (15) held directly or indirectly in sealed contact with the sliding skirt (6);
• at least one sliding skirt spring (16) which tends to bring the sliding skirt (6) closer to the fixed skirt (5), and to axially compress the extensible continuous segment (9).

2. Sealing device for a piston according to Claim 1, **characterized in that** the mechanical inter-skirt connection (7) consists of a mandrel (17) integral with the compression face (11) and co-operating with a mandrel orifice (18) arranged axially in the sliding skirt (6), said mandrel (17) being housed in said orifice (18).

3. Sealing device for a piston according to Claim 1, **characterized in that** the sliding skirt spring (16) is a resilient washer (19) supported on the one hand on the end of the mandrel (17), and on the other hand on the sliding skirt (6).

4. Sealing device for a piston according to Claim 1, **characterized in that** at least one floating plate (21) with an external diameter substantially smaller than the internal diameter of the cylinder (8) is directly or indirectly interposed between the extensible continuous segment (9) and the fixed skirt (5) or between said segment (9) and the sliding skirt (6), the axial segment face on the side of the fixed skirt (14) and/or the axial segment face on the side of the sliding skirt (15) being kept in sealed contact with said plate (21) whilst this latter is traversed by at least one axial plate orifice (31) enabling the mechanical inter-skirt connection (7) to pass through said plate (21).

5. Sealing device for a piston according to Claim 4, **characterized in that** the floating plate (21) includes plate centering means (23) which tend to radially center said plate (21) with respect to the sliding skirt (6) or with respect to the fixed skirt (5), said means (23) being supported directly or indirectly on one or the other of said skirts (5, 6) or on the mechanical inter-skirt connection (7).

6. Sealing device for a piston according to Claim 4, **characterized in that** the floating plate (21) includes a segment groove (22) which co-operates for radial centering of the extensible continuous segment (9) with respect to the sliding skirt (6) or with respect to the fixed skirt (5).

7. Sealing device for a piston according to Claim 1, **characterized in that** the fixed skirt (5) includes at least one scraper segment (24) housed in a scraper groove (25) arranged on the external cylindrical surface of said skirt (5).

8. Sealing device for a piston according to Claim 1, **characterized in that** the external cylindrical segment face (13) includes at least one axial micro-leakage groove (26).

9. Sealing device for a piston according to Claim 1, **characterized in that** the internal cylindrical segment face (12) co-operates with at least one circular sealing joint (32) made of flexible material in order to directly or indirectly produce a seal with the fixed skirt (5) and/or the sliding skirt (6).

10. Sealing device for a piston according to Claim 1, **characterized in that** the axial portion of the length of the internal cylindrical segment face (12) which is closest to the fixed skirt (5) has on average a larger diameter than the axial portion of the length of said internal cylindrical face (12) which is closest to the sliding skirt (6) in such a way that the extensible continuous segment (9) is, over all of its axial length, radially less thick and less rigid on the side of the fixed skirt (5) than on the side of the sliding skirt (6), whilst the external cylindrical segment face (13) for its part remains approximately of the same diameter over all the axial length of said segment (9).

11. Sealing device for a piston according to Claim 1, **characterized in that** at least one extensible continuous unlocking segment (35) of continuous annular form and of which the external diameter is substantially smaller than the internal diameter of the cylinder (8) is directly or indirectly interposed between two extensible continuous segments (9), said extensible continuous unlocking segment (35) comprising an internal cylindrical unlocking segment face (37) subjected to the pressure of the fluid (36) via the pressure transmission channel (10), an external cylindrical unlocking segment face (38) which can move closer to the cylinder (8) and two axial unlocking segment faces (39) each kept directly or indirectly in sealed contact with one of the two extensible continuous segments (9).

12. Sealing device for a piston according to either of Claims 1 and 11, **characterized in that** the sliding skirt (6) has extensible continuous segment centering means (40) which co-operate with the internal cylindrical segment face (12) in order to center the extensible continuous segment (9) with respect to said skirt (6) and/or unlocking segment centering means (41) which co-operate with the internal cylindrical unlocking segment face (37) in order to center the extensible continuous unlocking segment (35) with respect to said skirt (6).

13. Sealing device for a piston according to either of Claims 1 and 11, **characterized in that** the extensible continuous segment (9) and/or the extensible continuous unlocking segment (35) is (are) kept approximately centered with respect to the sliding skirt (6) by a centering ring (48) which is itself centered with respect to said skirt (6) by centering ring centering means (49).
